# EUROPÄISCHE PATENTSCHRIFT

(11) **EP 3 960 273 B1**
(45) Veröffentlichungstag und Bekanntmachung des Hinweises auf die Patenterteilung: **28.02.2024**
(21) Anmeldenummer: 20192924.7
(22) Anmeldetag: 26.08.2020
(51) Int. Cl.: B01D 46/12, B01D 46/52

(54) **KASSETTENFILTER MIT FILTERELEMENT MIT SPEZIALFALTUNG**
CARTRIDGE FILTER WITH FILTER ELEMENT WITH SPECIAL FOLDING
FILTRE À CASSETTE POURVU D'ÉLÉMENT FILTRANT À PLI SPÉCIAL

(43) Veröffentlichungstag der Anmeldung: 02.03.2022
(73) Patentinhaber: Carl Freudenberg KG, 69469 Weinheim (DE)
(72) Erfinder: Tapper, Renate, 64625 Bensheim (DE)

(56) Entgegenhaltungen:
- EP-A1- 3 646 934
- WO-A1-2005/037408
- WO-A1-2021/122455
- WO-A2-2007/014602
- US-A1- 2015 107 201

## Beschreibung

Die Erfindung betrifft einen Kassettenfilter gemäß dem Oberbegriff von Anspruch 1.

### Stand der Technik

Aus dem Stand der Technik sind Kassettenfilter bekannt, beispielsweise aus der WO 2013/185878 A1, siehe dort Figur 7. Kassettenfilter besitzen einen Rahmen, in welchem eine Mehrzahl von Filterelementen aufgenommen ist. Die Filterelemente bestehen dabei in der Regel aus einem plissierten, d.h. gefalteten Filtermedium. Die Filterelemente sind derart in dem Rahmen aufgenommen, dass jeweils zwei aneinander angrenzende Filterelemente in einem spitzen Winkel zueinander angeordnet sind und somit eine V- förmige Anordnung besitzen. Die Durchströmungsrichtung des Kassettenfilters ist i.d.R. von der breiten Seite des V zur Spitze des V. Zu filternde Luft gelangt dann durch die Öffnung zwischen zwei Filterelementen in den Filter. Eine jeweilige V- förmige Anordnung von Filterelementen kann als Filterpaket bezeichnet werden. Aneinander angrenzende Filterelemente werden im Grenzbereich miteinander verbunden und abgedichtet, z.B. unter Zuhilfenahme von mit Kleber gefüllten Traversen. Im Bereich der Abdichtung kann keine Luft in den Filter einströmen. Je breiter die Abdichtungen sind, desto höher wird die Druckdifferenz des Filters. Schmalere Abdichtungen hingegen würden sich positiv auf den Druckverlust des Filters auswirken.

Um schmalere Abdichtungen zu realisieren ist es bekannt, die plissierten Filterelemente miteinander zu verschränken. Problematisch dabei ist jedoch, dass bei der Verwendung von Glasfaserpapier als Filtermedium auf Grund von seiner geringen mechanischen Festigkeit die Gefahr einer Zerstörung des Filtermediums besteht. Bei einer alternativen Lösung, welche einen Gehrungsschnitt durch die Filterelemente vorsieht, ist eine sichere Abdichtung der Filterelemente im Bereich ihrer Gehrung nur schwierig zu erreichen. Hier kann leicht eine potenzielle Leckagestelle entstehen.

Aus dem Stand der Technik sind auch gefaltete Filter bekannt, deren Falthöhen über die Erstreckung des Filterelements nicht einheitlich sind. Durch die Anpassung der Falthöhen der Faltabschnitte kann eine Anpassung des Filterelements an einen umgebenden Rahmen vorgenommen werden. Eine derartige Faltung wird für runde Filterpatronen und für rechteckige Partikelfilter in der US 2007/0157589 A1 beschrieben. In der DE10 2012 000 470 A1 wird dies für in der Draufsicht rechteckige Luftfilterelemente für Kraftfahrzeuge beschrieben.

In der US 2015/0107201 A1 wird eine Filterpatrone mit einem oder mehreren gefalteten Filterelementen beschrieben. Die Filterelemente sind teilweise v-förmig zueinander angeordnet und weisen in ihrem Querschnitt eine rampenförmige Ausgestaltung auf.

### Aufgabenstellung

Aufgabe der vorliegenden Erfindung ist es einen Kassettenfilter mit reduziertem Druckverlust zu schaffen.

### Technische Lösung

Gelöst wird diese Aufgabe durch einen Kassettenfilter mit den Merkmalen von Anspruch 1.

Der erfindungsgemäße Kassettenfilter zur Reinigung von einem Fluid besitzt einem Rahmen und eine Mehrzahl von wie nachstehend beschriebenen speziellen Filterelementen. Die Filterelemente sind dabei derart in dem Rahmen aufgenommen, dass je mindestens zwei aneinander angrenzende Filterelemente in einem spitzen Winkel ϕ zueinander angeordnet sind, wobei die Längsachsen von aneinander angrenzenden Filterelementen die Schenkel des spitzen Winkels bilden. Die Filterelemente besitzen damit eine V-förmige Anordnung. Die Falzkanten, welche durch Faltenberge und Faltentäler gebildet werden, erstrecken sich senkrecht zu den Schenkeln des spitzen Winkels ϕ. In vorteilhafter Weise besitzen sie eine Spezialfaltung.

Die Faltung ist dabei erfindungsgemäß derart, dass die Höhe des Filterelements in allen Randbereichen (A, B) kleiner ist als in seinem mittleren Bereich, welcher in etwa mittig zwischen den Randbereichen liegt, und sich in den Randbereichen kleinere Faltflächen als in seinem mittleren Bereich ergeben. Die Längsachse und Längsrichtung eines Filterelements führen von einem Randbereiche A zum anderen Randbereich B. Es ist eine reduzierte Höhe in allen Randbereichen vorgesehen, wo Filterelemente aneinander angrenzen. Die Höhe ist also in allen Randbereichen (A, B) aller Filterelemente kleiner als in den mittleren Bereichen der Filterelemente. Dann haben die Filterelemente einen identischen Aufbau und lassen sich kostengünstig herstellen.

Das bedeutet, dass sich die Höhe des Filterelements von einem ersten Randbereich (d.h. einer ersten Seite A) hin zu einem anderen Randbereich (d.h. zur anderen, zweiten Seite B) des Filterelements zuerst vergrößert und dann wieder verkleinert. Bei dieser Eigenschaft geht es also nicht um die Dicke des Filtermediums, aus welchem das Filterelement gebildet wird, sondern um die Höhe des Filterelements, die Plissierhöhe, also um den "Höhenunterschied" zwischen Faltental und Faltenberg. Es liegt folglich in allen Varianten eine Änderung der Höhe des Filterelements über seine Erstreckung in Längsrichtung vor.

Durch die Verwendung der erfindungsgemäßen Filterelemente in einem Kassettenfilter wird in vorteilhafter Weise erreicht, dass die Bereiche schlanker gestaltet werden können, in welchen keine Luft den Filter durchströmen kann, nämlich die Grenzbereiche, in welchem die Filterelemente aneinander angrenzen und abgedichtet werden. Auch die Randbereiche am Rahmen des Filters können schlanker gestaltet werden. Dank der Filterelemente mit Spezialfaltung kann dieser störende Bereich wesentlich verkleinert werden. Durch die Verkleinerung ergibt sich ein geringerer Druckverlust des Kassettenfilters und damit eine bessere Filtrationsleistung.

Des Weiteren wird die Filtrationsleistung im Vergleich zu gleichmäßig plissierten Filtermedien mit nur minimaler Höhe verbessert, da die wirksame Filterfläche des Filtermediums dank der größeren Faltflächen im mittleren Bereich vergrößert wird.

Erfindungsgemäß besitzt ein jeweiliges gefaltetes Filterelement in der Seitenansicht eine Ausgestaltung mit einer geraden Kante und einer konvexen Kante, also einer sich von der geraden Kante entfernenden und wieder annähernden Kurve.

Es wurde als besonders vorteilhaft erkannt, dass ein jeweiliges Filterelement in der Draufsicht eine rechteckige Form aufweist. Ein Filterelement dieser Form kann einfach in rechteckigen Rahmen eines Filters verwendet werden.

Es wurde weiter als besonders vorteilhaft erkannt, dass die Höhe des Filterelements in seiner Mitte im Bereich von hₘₐₓ=20 bis 50 mm, in den Randbereichen mit reduzierter Höhe im Bereich von hₘᵢₙ=5 bis 20 mm liegt.

In Weiterbildung des Kassettenfilters ist das Filtermedium ein Vliesstoff oder ein Glasfaserpapier ist und / oder enthält das Filtermedium eine Membran.

Vorteilhaft erscheint, wenn je zwei aneinander angrenzende Filterelemente des Kassettenfilters miteinander verklebt sind.

In Weiterbildung des Kassettenfilters ist ein jeweiliges Filterelement in Minipleat-Technik mit Hotmeltfixierung der Faltflächen ausgeführt. Ein Hotmelt-Klebefaden dient dabei als Abstandshalter zwischen den Faltflächen. Dies bewirkt eine optimale Nutzung der Filterfläche aller Faltflächen bei gleichzeitig verbesserter Stabilität eines jeweiligen Filterelements.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll anhand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung
- Fig. 1: Filterelemente für einen Kassettenfilter
- Fig. 2: einen erfindungsgemäßen Kassettenfilter
- Fig. 3a-c: Beispiele für unterschiedliche Formen eines Filterelements in der Seitenansicht

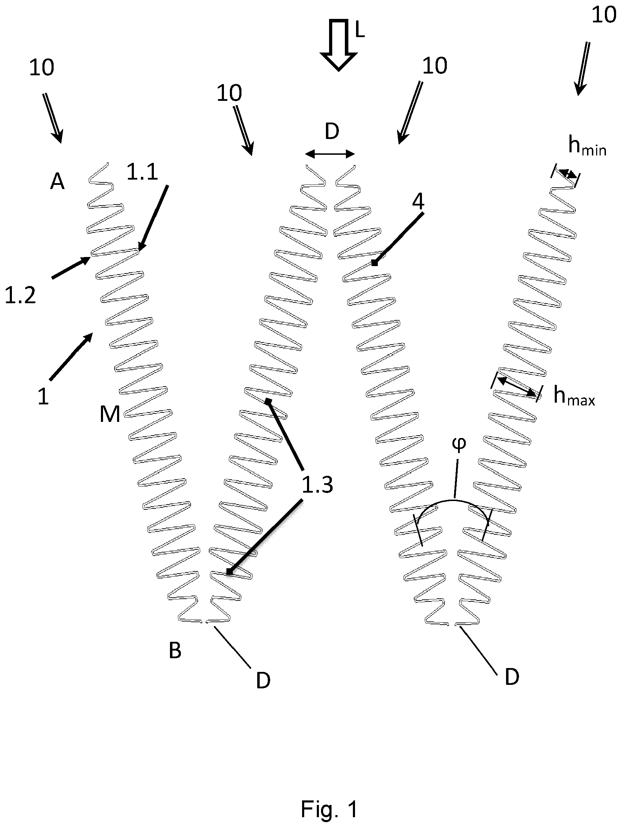

In Figur 1 sind vier Filterelemente 10 für einen Filter 200 dargestellt. Ein jeweiliges Filterelement 10 ist über seine Fläche mit einer Faltung 1 versehen. Im Vergleich zu bekannten plissierten Filterelementen ist das Filtermedium 4 des Filterelements 10 mit einer speziellen Faltung 1 versehen.

Das Filterelement 10 besitzt eine Faltung 1, so dass mehrere Faltenberge 1.1 und Faltentäler 1.2 gebildet werden.

Bei der Faltung 1 handelt es sich nicht um eine bekannte Leporello-Faltung bzw. gleichmäßige Zick-Zack-Faltung, welche gemeinhin auch als Plissieren bezeichnet wird, und welche lauter gleichgroße, rechteckige Faltabschnitte 1.3 aufweist. Vielmehr ist die Faltung 1 als spezielle Faltung 1 ausgeführt, so dass sich Faltflächen bzw. Faltabschnitte 1.3 unterschiedlicher Größe ergeben. Die Faltung 1 ist dabei derart, dass die Höhe hₘᵢₙ des Filterelements in den Randbereichen A, B kleiner ist als die Höhe hₘₐₓ in seinem mittleren Bereich M und sich in den Randbereichen A, B so kleinere Faltfläche 1.3 als in seinem mittleren Bereich M ergeben.

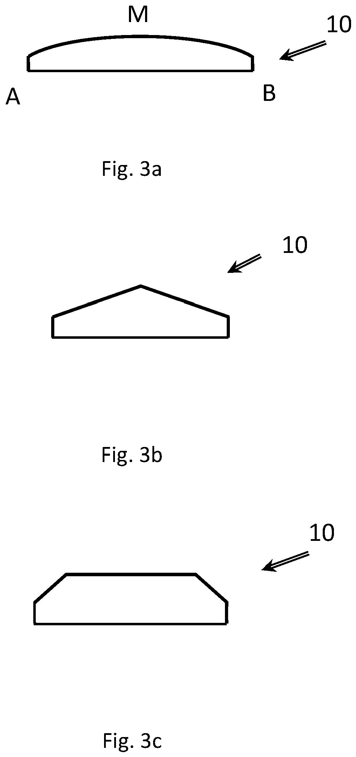

In der Seitenansicht des gefaltete Filterelements 10 ist die dachförmige Ausgestaltung zu erkennen, vgl. Figuren 3a -c.

In einer alternativen, nicht dargestellten und nicht erfindungsgemäßen Ausführungsform ist die Höhe des Filterelements 10 nur in den Bereichen D auf hₘᵢₙ reduziert, wo zwei Filterelemente 10 aneinander angrenzen. Die Höhe am freien Ende des ganz linken und ganz rechten Filterelements in der Darstellung von Figur 1 kann dann auch die größere Höhe hₘₐₓ aufweisen. Diese Ausführungsvariante ist jedoch etwas nachteiliger, da die Randbereiche am Rahmen des Filters breiter sind und störende Bereiche darstellen, welche einen höheren Druckverlust zur Folge haben.

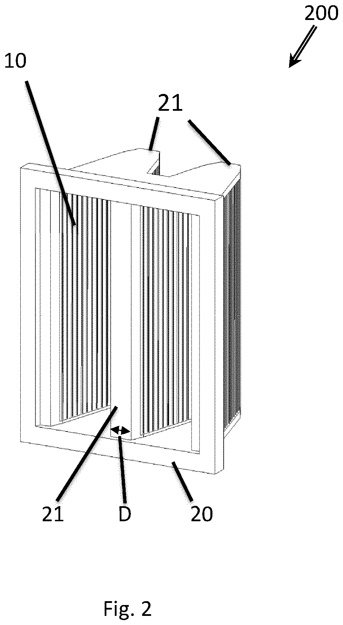

In der Figur 1 ist auch dargestellt, wie die zuvor beschriebenen Filterelemente 10 zueinander positioniert werden können, so dass die Filterelemente 10 in einem spitzen Winkel ϕ zueinander angeordnet sind und von einem Rahmen eines Kassettenfilters 200 (siehe Fig. 2) aufgenommen werden können. Dadurch ergibt sich, dass die Filterelemente 10 eine V-förmige Anordnung besitzen. Durch die Verwendung dieser Filterelemente 10 kann - im Gegensatz zu Filterelementen, welche nicht mit einer Spezialfaltung 1 versehen sind - der Bereich D verkleinert werden, wobei der Bereich D derjenige ist, der im Grenzbereich liegt und wegen der Abdichtung der Filterelemente nicht von Luft L durchströmbar ist. Durch die Verkleinerung dieses Bereichs D kann der abgedichtete und nicht durchströmbare Bereich verkleinert werden und die Druckdifferenz eines Filters 200 mit solchen Filterelementen 10 reduziert werden.

Aufgenommen werden die Filterelemente 10 von einem Rahmen 20 und bilden so einen Kassettenfilter 200 mit V-förmiger Anordnung der Filterelemente 10 (siehe Figur 2). Im Grenzbereich, wo die Filterelemente 10 aneinander angrenzen und gegeneinander abgedichtet sind, könnten leistenförmige Traversen 21 vorgesehen sein. Damit die Filterelemente 10 gegenüber dem Rahmen 20 und den Traversen 21 abgedichtet sind und keine Bypässe vorliegen, wo Luft L den Filter 200 passieren kann, ohne die Filterelemente 10 zu durchströmen, können die Filterelemente 10 im Bereich der Traverse 21 miteinander verklebt sein. Ebenfalls können die Filterelemente 10 mit dem Rahmen 20 verklebt sein. Eine solche Verklebung kann beispielsweise durch einen Verguss mit PUR Klebstoff erfolgen. Die Traversen 21 können schmal ausgeführt sein. Dadurch kann der Bereich D, welcher nicht von Luft L durchströmt werden kann, klein gehalten werden.

In den Figuren 3a bis 3c sind die Seitenansichten eines Filterelements 10 in unterschiedlichen Ausführungsvarianten dargestellt. Allen gemeinsam ist eine Ausgestaltung mit einer geraden Kante und einer konvexen Kante, wobei je nach Form der konvexen Kante eine - begrifflich in Anlehnung an bekannte Hausdachformen - tonnenförmige, sattelförmige oder walmförmige Ausgestaltung denkbar ist. Tonnenförmige und sattelförmige Ausgestaltung sind erfindungsgemäß.

### Bezugszeichenliste

- 1: Spezialfaltung
- 1.1: Faltenberg
- 1.2: Faltental
- 1.3: Faltfläche
- 4: Filtermedium

- 10: Filterelement mit Spezialfaltung

- 20: Rahmen
- 21: Traverse

- 200: Kassettenfilter

- h_{min, max}: Höhe des Filterelements

- A: erste Seite (Randbereich)
- B: zweite Seite (Randbereich)
- D: Bereich, der von Luft nicht durchströmbar ist
- L: Luftstrom
- M: mittlerer Bereich

- ϕ: Winkel zwischen aneinander angrenzenden Filterelementen

## Patentansprüche

1. Kassettenfilter (200) zur Reinigung von einem Fluid mit einem Rahmen (20) und einer Mehrzahl von Filterelementen (10) mit einem mit einer Faltung (1) versehenen Filtermedium (4), wobei die Filterelemente (10) derart in dem Rahmen (20) aufgenommen sind, dass je mindestens zwei aneinander angrenzende Filterelemente (10) in einem spitzen Winkel (ϕ) zueinander angeordnet sind und so eine V-förmige Anordnung besitzen, wobei die Filterelemente (10) Falzkanten aufweisen, welche durch Faltenberge (1.1) und Faltentäler (1.2) gebildet werden, und sich senkrecht zu den Schenkeln des spitzen Winkels ϕ erstrecken
**dadurch gekennzeichnet,**
**dass** ein jeweiliges Filterelement (10), derart mit Faltungen (1) versehen ist, dass die Höhe des Filterelements in allen Randbereichen (A, B) kleiner ist (hₘᵢₙ) als die Höhe (hₘₐₓ) in seinem mittleren Bereich (M) und sich in den Randbereichen (A, B) kleinere Faltflächen (1.3) als in seinem mittleren (M) Bereich ergeben, dass
das gefaltete Filterelement (10) in der Seitenansicht eine Ausgestaltung mit einer geraden Kante und einer konvexen Kante besitzt, und, dass die konvexe Kante tonnendachförmig oder satteldachförmig ausgestaltet ist.

2. Kassettenfilter nach einem der vorangehenden Ansprüche, dadurch
die Höhe (h) des Filterelements (10) in seiner Mitte im Bereich (M) von hₘₐₓ=20 bis 50 mm und in den Randbereichen (A, B) im Bereich von hₘᵢₙ=5 bis 20 mm liegt.

3. Kassettenfilter nach einem der vorangehenden Ansprüche, **dadurch gekennzeichnet, dass**
das Filtermedium (4) ein Vliesstoff oder ein Glasfaserpapier ist.

4. Kassettenfilter nach einem der vorangehenden Ansprüche, **dadurch gekennzeichnet, dass** das Filtermedium eine Membran enthält.

5. Kassettenfilter nach einem der vorangehenden Ansprüche, **dadurch gekennzeichnet,**
**dass** je zwei aneinander angrenzende Filterelemente (10) miteinander verklebt sind.

6. Kassettenfilter nach einem der vorangehenden Ansprüche, **dadurch gekennzeichnet,**
**dass** ein jeweiliges Filterelement (10) in Minipleat-Technik mit Hotmeltfixierung der Faltflächen (1.3) ausgeführt ist.

## Claims

1. Cassette filter (200) for cleaning a fluid, having a frame (20) and a plurality of filter elements (10) with a filter medium (4) provided with a fold formation (1), wherein the filter elements (10) are received in the frame (20) such that in each case at least two adjacent filter elements (10) are arranged at an acute angle (ϕ) in relation to one another and therefore assume a V-shaped arrangement, wherein the filter elements (10) have folding edges, which are formed by fold peaks (1.1) and fold troughs (1.2) and extend perpendicularly in relation to the limbs of the acute angle ϕ, **characterized in that** a respective filter element (10) is provided with fold formations (1) such that the height of the filter element in all the edge regions (A, B) is smaller (hₘᵢₙ) than the height (hₘₐₓ) in its central region (M) and the folding surfaces (1.3) obtained in the edge regions (A, B) of the filter element are smaller than those in its central region (M), and
**in that**, in side view, the folded filter element (10) has a configuration with a straight edge and a convex edge, and
**in that** the convex edge is configured in the form of a barrel roof or saddle roof.

2. Cassette filter according to one of the preceding claims, **characterized**
**in that** the height (h) of the filter element (10) in its centre is in the region (M) of hₘₐₓ =20 to 50 mm and in the edge regions (A, B) is in the region of hₘᵢₙ =5 to 20 mm.

3. Cassette filter according to one of the preceding claims, **characterized**
**in that** the filter medium (4) is a non-woven fabric or a glass-fibre paper.

4. Cassette filter according to one of the preceding claims, **characterized**
**in that** the filter medium contains a membrane.

5. Cassette filter according to one of the preceding claims, **characterized**
**in that** in each case two adjacent filter elements (10) are adhesively bonded to one another.

6. Cassette filter according to one of the preceding claims, **characterized**
**in that** a respective filter element (10) is of mini-pleat design with hot-melt fixing of the folding surfaces (1.3) .

## Revendications

1. Filtre en cassette (200) pour la purification d'un fluide, comprenant un cadre (20) et une pluralité d'éléments filtrants (10) avec un média filtrant (4) pourvu d'un pliage (1), les éléments filtrants (10) étant logés dans le cadre (20) de telle sorte qu'au moins deux éléments filtrants (10) adjacents l'un à l'autre sont agencés selon un angle aigu (ϕ) l'un par rapport à l'autre et ont ainsi une disposition en forme de V, les éléments filtrants (10) présentant des arêtes de pliage qui sont formées par des sommets de plis (1.1) et des vallées de plis (1.2), et s'étendent perpendiculairement aux branches de l'angle aigu ϕ
**caractérisé**
**en ce que** chaque élément filtrant (10) est pourvu de plis (1) de telle sorte que la hauteur de l'élément filtrant dans toutes les zones de bordure (A, B) est inférieure (hₘᵢₙ) à la hauteur (hₘₐₓ) dans sa zone centrale (M) et qu'il en résulte dans les zones de bord (A, B) des surfaces de pliage (1.3) plus petites que dans sa zone centrale (M), en ce que
l'élément filtrant plié (10) présente, en vue latérale, une configuration avec un bord droit et un bord convexe, et en ce que le bord convexe est configuré en forme de toit en berceau ou de toit à deux pans.

2. Filtre en cassette selon l'une des revendications précédentes, **caractérisé en ce que**
la hauteur (h) de l'élément filtrant (10) se situe en son centre dans la gamme (M) allant de hₘₐₓ=20 à 50 mm et dans les zones de bordure (A, B) dans la gamme allant de hₘᵢₙ=5 à 20 mm.

3. Filtre en cassette selon l'une des revendications précédentes, **caractérisé en ce que**
le média filtrant (4) est un non-tissé ou un papier en fibres de verre.

4. Filtre en cassette selon l'une des revendications précédentes, **caractérisé en ce que** le média filtrant contient une membrane.

5. Filtre en cassette selon l'une des revendications précédentes, **caractérisé**
**en ce que** deux éléments filtrants (10) adjacents sont collés l'un à l'autre.

6. Filtre en cassette selon l'une des revendications précédentes, **caractérisé**
**en ce qu'**un élément filtrant (10) respectif est réalisé selon la technique des mini-plis avec fixation thermofusible des surfaces pliées (1.3).
